# EUROPEAN PATENT SPECIFICATION

(11) **EP 2 727 472 B1**
(45) Date of publication and mention of the grant of the patent: **04.10.2017**
(21) Application number: 13191251.1
(22) Date of filing: 01.11.2013
(51) Int. Cl.: A23K 40/20, A23K 40/30, A23K 20/158

(54) **New method to compose and process an animal feed additive with butyrate**
Neues Verfahren zur Komposition und Verarbeitung eines Tierfutterzusatzes mit Butyrat
Nouveau procédé pour fabriquer un additif alimentaire pour animaux comprenant du butyrate

(30) Priority: 02.11.2012 NL 2009744
(43) Date of publication of application: 07.05.2014
(73) Proprietor: Palital GmbH & Co. KG, 46354 Südlohn-Oeding (DE)
(72) Inventor: van den Bighelaar, Hendrikus Gerardus Martinus M., 46354 Südlohn - Oeding (DE)
(74) Representative: V.O.

(56) References cited:
- EP-A1- 2 289 505
- EP-A2- 0 233 819
- WO-A1-2010/060914
- WO-A1-2010/066397
- WO-A1-2011/025496
- DE-A1-102004 011 832
- US-A1- 2008 031 998

## Description

### FIELD OF THE INVENTION

The invention relates to the field of animal feeds, more particularly to formulations for animal feed additives comprising butyrate salt and the processing methods for manufacturing these butyrate salts for use in animal feeds.

### BACKGROUND

Salts of organic acids are widely used in the animal feed industry as sources of acids in animal feed rations. The salts dissociate in the digestive tract of the animal and provide a number of beneficial effects, including the maintenance of a healthy gastric and intestinal environment and an improved intestinal microbial balance.

Next to their acidifying effect, salts of butyric acid have an important function on the intestinal morphology of the gut through a trophic effect on the gastric and intestinal mucosa.

Butyric acid (CH₃-CH₂-CH₂-COOH) is a saturated carboxylic acid, an oily colourless liquid with a boiling point of 163 °C. It is easily soluble in water and organic solvents, such as alcohol. It is characterised by a very unpleasant odour of rotten butter, which restricts its processing and use in animal feed. It has been attempted to overcome this disadvantage by coating the butyrate salt with a coating substance, such as a fatty acid derivative, a carbohydrate or a protein. After this coating granules of the coated butyrate are formed, which then can be mixed with animal feed. Such processes are, for instance, described in EP 2025243, EP 1439160, WO 2008/091170, EP 1354520, FR 2902978, CN 101301030, WO 2010/066397, WO 2011/025496, US 2008/031998 and US 2008/0031999.

WO 2010/066397 discloses a formulation for use in an animal feed comprising coated granules comprising butyrate salt, wherein the granules comprise fat as binding matrix for the butyrate.

WO 2011/025496 describes a process in which a composition of butyric acid and one or more oils is added to an animal feed, whereafter the feed may be extruded.

US 2008/031998 describes a process for preparing a coated granule, which may contain a zinc salt of butyric acid and an enzyme in which process allegedly an extruder is used.

However, during the granulation very small uncoated or partially coated particles of the butyrate salt will remain. Also, the granules that are formed in the granulation process will disintegrate upon (vigorous) handling. Both phenomena lead to the forming of dust when processing the granulated butyrate, again accompanied by the liberation of the unpleasant smell. Therefore, there is still need for a form of butyrate that minimises the unpleasant aroma during processing in animal feed or as a feed additive.

Another disadvantage of the butyrate granules prepared according to these known methods is that the amount of active butyrate that can be included in these granules is limited to a maximum of about 30% based on total weight.

### SUMMARY OF THE INVENTION

The invention now relates to a method for preparing a feed additive comprising a butyrate salt comprising the steps of:
a) extruding a composition comprising of said butyrate salt in a matrix of a fatty substance;
b) coating the granules formed in step a.

In such a method preferably the butyrate salt is chosen from the group consisting of sodium, potassium, zinc, manganese, copper, selenium, ammonium and calcium butyrate salt, preferably sodium- or calcium butyrate.

Further, in a preferred embodiment the butyrate salt is mixed into a matrix of a fatty substance before extrusion. Also part of the invention is the embodiment wherein the composition is coated by adding a fatty substance to the extruded matrix containing the butyrate salt. Preferably herein the fatty substance used in coating step b) is identical to the fatty substance in the matrix for extrusion in step a).

The fatty substance that is used in the present invention is chosen from the group of fatty acids, fatty alcohols, glyceride esters of fatty acids, alkyl esters of fatty acids, hydroxyl fatty acid analogues and mixtures thereof. Preferably the fatty substance is a vegetable or animal fat, such as a vegetable oil like coconut oil, palm oil, soybean oil, rapeseed oil, sunflower oil, corn oil, safflower oil, sesame oil, linseed oil, grape seed oil or olive oil. In a further preferred embodiment of the invention a further active ingredient is added before or during the extrusion or coating process. Preferably said further active ingredient is chosen from the group consisting of short chain fatty acids (SCFAs), lactate salts, vitamins, plant extracts, pre- or probiotic compounds and yeast extracts, or combinations thereof.

The present invention is also related to a coated, extruded feed additive produced by a method according to the invention as indicated herein. Preferably such a coated, extruded feed additive product is spherical. In a further preferred embodiment, such a coated, extruded feed additive product has a diameter of about 0.8 mm and a length of about 1 mm, it may have a content of more than 20 weight% with respect to the total weight of the feed additive of butyrate, preferably more than 30%, more preferably more than 40%.

The invention also relates to an animal feed to which the coated, extruded feed additive according to the invention has been added.

Further, the invention relates to the use of a coated, extruded feed additive according to the invention for addition to animal feed.

### DETAILED DESCRIPTION

It has been found to be very advantageous to produce butyrate granules by extrusion.

The ingredients that are used to feed the extruder can be in powder form, but they may also comprise some liquid(s). The butyrate salt can, for example, be prepared by mixing a solution of butyric acid with an appropriate base. The solvent in which the butyric acid was dissolved then needs to be removed to obtain the salt as a powder. Alternatively, the solvent is only partially removed, so that a slurry or dough of the butyrate salt is formed, which is processed in the extruder. As a consequence, the applied temperature in the extruder will evaporate the remaining solvent(s) or liquid(s).

The butyrate thus is preferably used as a salt. The cation of the salt can be chosen from the group consisting of sodium, potassium, zinc, magnesium, manganese, copper, selenium, ammonium and calcium or other suitable cations. When applied as a base in the reaction to form butyrate salt as described above, these cations can be added , such as calcium hydroxide, calcium oxide, calcium hydroxide, calcium carbonate, sodium hydroxide, sodium carbonate, magnesium oxide, magnesium hydroxide, magnesium carbonate, ammonium hydroxide, zinc oxide or hydroxide, copper oxide or hydroxide, manganese oxide or hydroxide and selenium oxide. Preferably, the sodium or the calcium butyrate salts are used in the present invention.

In order to fashion a proper substance that can be extruded, the butyrate is preferably mixed into a matrix, preferably made of a fatty substance. This fatty substance in particular is chosen from the group of fatty acids, fatty alcohols, glyceride esters of fatty acids, alkyl esters of fatty acids, hydroxyl fatty acid analogues and/or mixtures thereof. Advantageously, such a fat or fatty acid derivative is a vegetable or animal fat, preferably the harder fraction of a vegetable oil like coconut oil, (hydrogenated) palm oil, soybean oil, rapeseed oil, sunflower oil, corn oil, safflower oil, sesame oil, linseed oil, grape seed oil or olive oil. The coating should preferably be stable at elevated temperatures (i.e. temperatures above body temperature, such as up to 50°C or 60°C) because some of the feed processing to which the butyrate feed additive is added is executed at such an elevated temperature. Therefore it is preferable that the fatty substance has a melting point of about 40°C or higher, preferably 50°C or higher, or more preferably 60°C or higher.

This mixture may contain a high weight percentage of butyrate, as long as the resulting mixture can be extruded in a normal extruder. The amount of butyrate in the extrusion mixture may achieve levels of up to 70% of butyrate salt and will in most cases be 30% or higher related to the total weight of the extrusion mixture.

The final mixture of butyrate and a fatty substance is then fed into an extruder. Extrusion can be done at room temperature or at elevated temperatures up to 70°C. It is most important that the extrusion mixture is suitable for extrusion and the specific extruder used. This generally means that this mixture should be sufficiently coherent and have the correct viscosity to be processed in an extruder. The extrusion can be a continuous process, but it may also be a batch process.

The shape in which the butyrate products are extruded may be of any form. However, spherical granules are preferred, because these are easier to handle in the subsequent coating process.

After extrusion, the extruded products are coated. This has the advantage that - in contrast to the methods used in the prior art - the coating is applied to reasonably uniformly shaped structures (the extrudates) which are already mixed with a fatty substance in a matrix and are therefore less prone to generate dust. Even when the coating is only partial, the chance of dust formation is much lower than with traditionally coated butyrate granules.

The coating may be any coating that is conventionally used to pass the stomach of the animal. The butyrate will mainly deploy its activity in the intestine, in particular the small intestine, which means that the butyrate should arrive there reasonably intact. This is preferably achieved by coating the granules with a fat that may be the same or different as the matrix in which the butyrate is extruded. Therefore, the fatty substance may in particular be chosen from the group of fatty acids, fatty alcohols, glyceride esters of fatty acids, alkyl esters of fatty acids, hydroxyl fatty acid analogues and mixtures thereof. Advantageously, such a fat or fatty acid derivative is a vegetable or animal fat, preferably the harder fraction of a vegetable oil like coconut oil, (hydrogenated) palm oil, soybean oil, rapeseed oil, sunflower oil, corn oil, safflower oil, sesame oil, linseed oil, grape seed oil or olive oil.

During the extrusion process or during the coating process other active ingredients may be added to the butyrate preparation or the granule. Compounds may be added that are useful in the extrusion process or the coating process itself. Examples of these are emulsifiers, liquefying agents, binders and the like. Furthermore, agents such as colorants, odorants, preservatives, stabilisers and the like may be added. More importantly, any other compound that could or would be beneficial to the health of the animal can be added for this purpose. Examples of such further active ingredients are short chain fatty acids (SCFAs), lactate salts, vitamins, plant extracts, botanicals, pre- or probiotic compounds and yeast extracts and derivates thereof. Again, it is also preferred that the additional active ingredients implement their beneficial effect through the gastro-intestinal route, most preferably in the intestine.

Plant extracts may be beneficial to prevent intestinal disorders, to reduce bacterial and fungal growth, to improve feed efficiency and to improve the general health of the animal and the products made by or from the animal (such as milk, eggs and meat). Suitable plant extracts are extracts of, for example, St-John's wort (*Hypercium perforatum*), nutmeg seeds (*Myristica*), green tea (*Camellia sinensis*), *Ginkgo biloba,* sugarcane juice (*Saccharum spp*.), Angelica root (*Angelica archangelica*), Bergamot (*Citrus bergamot*), bitter melon (*Momardica charantia*), *Eucalyptus* spp., cassia (*Cinnamomum aromaticum)*, cinnamon (*Cinnamomum zeylanicum*), clove (*Szygium aromaticum*), cardamom (*Elettaria caramomum*), cardo sarb (*Cirsium pascuarense*), cumin (*Cuminum cyminum*), coriander (*Coriandum sativum*), anise (*Illicum verum*), celery (*Apium graveolens*), oregano (*Oreganum vulgare*), elder (*Sambucus nigra*), ezovian (*Teucrium polium*), juniper berry (*Juniperus spp*.), lime, mandarin (*Citrus reticulata*), onion (*Allium cepa*) orange (C*itrus x sinensis*), pine, rosewood (*Dalbergia spp*.), savory (*Satureja spp*.), tarragon (*Artemisia dracunculus*), parsley (*Petroselium crispum*), fenugreek (*Trigonella foenum-graecum*), capsicum (*Capsicum annum*), lucerne or alfalfa (*Medicago sativa*), pepper (*Piper nigrum*), horseradish (*Cochlearia armoracia*), mustard (*Brassica nigra* or *Sinapis hirta*), ginger (*Zingiber officinale*), garlic (*Allium tuberosum* or *A. sativum*), rosemary, spider flower (*Cleome droserifolia*), sweet wormwood (*Artemisia annua*), thyme (*Thymus vulgaris*), sage (*Salvia apiana*), bay laurel (*Laurus nobilis*), peppermint (*Mentha piperita*), *Artemisia spp., Yucca schidigera*, neem (*Azadracha indica*), *Enterolobium cyclocarpum, Enterolobium timbouva, Phytolacca dodecandra, Pithecellobium saman, Quilaja saponaria, Samanea saman, Sapindus saponaria, Sesbania pachycarpa, Sesbania sesban, Zizyphus vulgaris, Ocimum gratissimum, Ephedra spp., Trifolium spp.,* and/or *Atlanta monophylla.*

In addition, essential oils such as anethol, eugenol, carvacrol, carvone, guaiacol, thymol or any derivate or extract that are obtainable from plants can be used. There is a vast amount of scientific literature describing the beneficial actions of these plant extracts, as well as many other plant extracts.

Further pre- and/or probiotic compositions and yeasts may be added. These compositions cause the gastrointestinal tract to harbour more and healthier micro-organisms. Suitable pre-biotica include, but are not limited to, oligosaccharides, such as e.g. fructo-, mannan- and galactooligosaccharides. Pro-biotica could be living organisms such as *Lactobacillus, Bacillus, Enterococcus* bacteria or *Saccharomyces,* which aid in developing and maintaining a healthy intestinal flora. Instead of intact, living cells, extracts in any form of these organisms may be useful, such as cell membranes.

In another embodiment, the invention comprises the granules that - are produced according to the above described methods. Such granules are particularly suited to be added to animal feed. The granules can be of any suitable size, which of course will be determined by the extruder lay-out and extrusion process. Preferably, the granules are about 0.8 mm in diameter and about 1 mm in length. These dimensions make the granules easy to handle (and transport) and are therefore suitable for any kind of animal feed (i.e. for all animal species).

Preferably, the granules contain at least twenty weight percent of butyrate related to the weight of the whole granule. However, since the initial mixture of butyrate may contain a very high amount of butyrate, the granules could contain more than 40% butyrate after coating. Since this is more than the butyrate products that are currently available, the invention has a further advantage in that less amounts of the granules need to be added to the animal feed to contain a useful addition of butyrate. This, in turn, means that stock levels of butyrate in the feed mill can be decreased. In the same respect, transport and storage costs will be less.

The granules are mixed into the normal feed, where any ratio between the feed and the additive can be used, depending on feeding requirements. Alternatively, the granules may be added to a premix and sold as such.

The feed additive is applicable for a wide variety of animals. Suitable animals are farm animals, like calves and cattle, pigs and piglets, sheep, goats, and poultry. However, this feed additive can also be used for pets, aquaculture species and zoo animals.

### EXAMPLES

### Description of the extrusion process to create a butyrate product in a stomach-stable fat-matrix.

1. Reaction of butyric acid with Ca(OH)₂ / CaO / CaCO₃ or NaOH / NaCO₃ to create either a sodium or calcium butyrate.
   Mixtures of other salts in reaction with butyric acid are possible.
2. Sieving the powdered product into a uniform particle size of <200 µm.
3. Mixing the sieved butyrate with hardened fat powder in a separate, dedicated mixer
4. Feeding the mixture into the extruder.

The extruder (twin screw version) is equipped with 4 heating sections and a separate heating for the head and die-plate.

Each section is separately regulated for temperature.

The heat is gradually increased in the direction towards the head and die-plate, typically from 35°C up to 42°C. Depending on the fat type and consistency, other temperature parameters can be used.

The temperature of the die-plate preferably is from approximately 38°C up to 40°C. Temperature variables are allowed to cope with the variables in fat type, consistency and environmental conditions.

The extruder is then started, producing a regular flow of butyrate product. In order to ensure a uniform particle size, a circular cutting blade, operating at 3000 rpm's is deployed.

The finished product drops on to a transport belt and is subsequently sieved before packaging.

## Claims

1. Method for preparing a feed additive comprising a butyrate salt comprising the steps of:
a) extruding a composition comprising of said butyrate salt in a matrix of a fatty substance;
b) coating the granules formed in step a.

2. Method according to claim 1, wherein the butyrate salt is chosen from the group consisting of sodium, potassium, zinc, manganese, copper, selenium, ammonium and calcium butyrate salt, preferably sodium- or calcium butyrate.

3. Method according to claim 1 or 2, wherein the butyrate salt is mixed into a matrix of a fatty substance before extrusion.

4. Method according to any of the preceding claims, wherein the composition is coated by adding a fatty substance to the extruded matrix comprising the butyrate salt.

5. Method according to claim 4, in which the fatty substance used in coating step b) is identical to the fatty substance in the matrix for extrusion in step a).

6. Method according to claim 3, 4 or 5, wherein the fatty substance is chosen from the group of fatty acids, fatty alcohols, glyceride esters of fatty acids, alkyl esters of fatty acids, hydroxyl fatty acid analogues and mixtures thereof.

7. Method according to claim 6, wherein the fatty substance is a vegetable or animal fat, such as a vegetable oil like coconut oil, palm oil, soybean oil, rapeseed oil, sunflower oil, corn oil, safflower oil, sesame oil, linseed oil, grape seed oil or olive oil.

8. Method according to any of the preceding claims, wherein a further active ingredient is added before or during the extrusion or coating process.

9. Method according to claim 8, wherein said further active ingredient is chosen from the group consisting of short chain fatty acids (SCFAs), lactate salts, vitamins, plant extracts, pre- or probiotic compounds and yeast extracts, or combinations thereof.

10. Coated, extruded feed additive produced by a method according to any of claims 1 - 9.

11. Coated, extruded feed additive product according to claim 10, which is spherical.

12. Coated, extruded feed additive product according to claim 10 or 11 having a diameter of 0.8 mm and a length of 1 mm.

13. Coated, extruded, feed additive according to anyone of claims 10 - 12, where more than 20 weight% with respect to the total weight of the feed additive is butyrate, preferably more than 30%, more preferably more than 40%.

14. Animal feed to which the coated, extruded feed additive according to anyone of claims 10 - 13 has been added.

15. Use of a coated, extruded feed additive according to anyone of claims 10 - 13 for addition to animal feed.

## Patentansprüche

1. Verfahren zur Herstellung eines Futtermittelzusatzes umfassend ein Butyratsalz, umfassend die Schritte von:
a) Extrudieren einer Zusammensetzung, umfassend das Butyratsalz, in einer Matrix einer Fettsubstanz;
b) Beschichten der in Schritt a geformten Granulate.

2. Verfahren nach Anspruch 1, wobei das Butyratsalz ausgewählt ist aus der Gruppe bestehend aus Natrium-, Kalium-, Zink-, Mangan-, Kupfer-, Selen-, Ammonium- und Kalziumbutyratsalz, bevorzugt Natrium- oder Kalziumbutyrat.

3. Verfahren nach Anspruch 1 oder 2, wobei das Butyratsalz vor Extrusion in eine Matrix aus einer Fettsubstanz gemischt wird.

4. Verfahren nach einem der vorhergehenden Ansprüche, wobei die Zusammensetzung durch Hinzufügen einer Fettsubstanz zu der extrudierten Matrix, umfassend das Butyratsalz, beschichtet wird.

5. Verfahren nach Anspruch 4, in dem die Fettsubstanz, verwendet in Beschichtungsschritt b), mit der Fettsubstanz in der Matrix für Extrusion in Schritt a) identisch ist.

6. Verfahren nach Anspruch 3, 4 oder 5, wobei die Fettsubstanz ausgewählt ist aus der Gruppe von Fettsäuren, Fettalkoholen, Glyceridestern von Fettsäuren, Alkylestern von Fettsäuren, Hydroxylfettsäureanaloga und Gemischen davon.

7. Verfahren nach Anspruch 6, wobei die Fettsubstanz ein pflanzliches oder tierisches Fett, wie etwa ein Pflanzenöl wie Kokosnussöl, Palmöl, Sojabohnenöl, Rapsöl, Sonnenblumenöl, Maisöl, Distelöl, Sesamöl, Leinöl, Traubenkernöl oder Olivenöl, ist.

8. Verfahren nach einem der vorhergehenden Ansprüche, wobei ein weiterer aktiver Bestandteil vor oder während des Extrusions- oder Beschichtungsverfahrens hinzugefügt wird.

9. Verfahren nach Anspruch 8, wobei der weitere aktive Bestandteil ausgewählt ist aus der Gruppe, bestehend aus kurzkettigen Fettsäuren (engl. short chain fetty acids, SCFAs), Lactatsalzen, Vitaminen, Pflanzenextrakten, prä- oder probiotischen Verbindungen und Hefeextrakten oder Kombinationen davon.

10. Beschichteter, extrudierter Futtermittelzusatz, hergestellt durch ein Verfahren nach einem der Ansprüche 1-9.

11. Beschichtetes, extrudiertes Futtermittelzusatzprodukt nach Anspruch 10, das kugelförmig ist.

12. Beschichtetes, extrudiertes Futtermittelzusatzprodukt nach Anspruch 10 oder 11 mit einem Durchmesser von 0,8 mm und einer Länge von 1 mm.

13. Beschichteter, extrudierter Futtermittelzusatz nach einem der Ansprüche 10-12, wo mehr als 20 Gew.-%, bezogen auf das Gesamtgewicht des Futtermittelzusatzes, Butyrat ist, bevorzugt mehr als 30 %, bevorzugter mehr als 40 %.

14. Tierfutter, zu dem der beschichtete, extrudierte Futtermittelzusatz nach einem der Ansprüche 10-13 hinzugefügt wurde.

15. Verwendung eines beschichteten, extrudierten Futtermittelzusatzes nach einem der Ansprüche 10-13 zum Hinzufügen zu Tierfutter.

## Revendications

1. Méthode de préparation d'un additif alimentaire comprenant un sel de butyrate comprenant les étapes consistant à :
a) extruder une composition comprenant ledit sel de butyrate dans une matrice d'une matière grasse ;
b) enrober les granules formés à l'étape a.

2. Méthode selon la revendication 1, dans laquelle le sel de butyrate est choisi dans le groupe constitué du sel de butyrate de sodium, potassium, zinc, manganèse, cuivre, sélénium, ammonium et calcium, de préférence le butyrate de sodium ou calcium.

3. Méthode selon la revendication 1 ou 2, dans laquelle le sel de butyrate est mélangé dans une matrice d'une matière grasse avant extrusion.

4. Méthode selon l'une quelconque des revendications précédentes, dans laquelle la composition est enrobée en ajoutant une matière grasse à la matrice extrudée comprenant le sel de butyrate.

5. Méthode selon la revendication 4, dans laquelle la matière grasse utilisée dans l'étape d'enrobage b) est identique à la matière grasse dans la matrice pour l'extrusion dans l'étape a).

6. Méthode selon la revendication 3, 4 ou 5, dans laquelle la matière grasse est choisie dans le groupe des acides gras, des alcools gras, des esters de glycéride d'acides gras, des alkyle esters d'acides gras, des analogues d'acides gras hydroxylés et des mélanges de ceux-ci.

7. Méthode selon la revendication 6, dans laquelle la matière grasse est une graisse végétale ou animale, telle qu'une huile végétale comme l'huile de noix de coco, l'huile de palme, l'huile de soja, l'huile de colza, l'huile de tournesol, l'huile de maïs, l'huile de carthame, l'huile de sésame, l'huile de lin, l'huile de pépins de raisin ou l'huile d'olive.

8. Méthode selon l'une quelconque des revendications précédentes, dans laquelle un autre principe actif est ajouté avant ou pendant le processus d'extrusion ou d'enrobage.

9. Méthode selon la revendication 8, dans laquelle ledit autre principe actif est choisi dans le groupe constitué des acides gras à chaîne courte (AGCC), des sels de lactate, des vitamines, des extraits de plantes, des composés pré- ou probiotiques et des extraits de levure, ou des combinaisons de ceux-ci.

10. Additif alimentaire extrudé enrobé produit par une méthode selon l'une quelconque des revendications 1 à 9.

11. Produit additif alimentaire extrudé enrobé selon la revendication 10, qui est sphérique.

12. Produit additif alimentaire extrudé enrobé selon la revendication 10 ou 11 ayant un diamètre de 0,8 mm et une longueur de 1 mm.

13. Additif alimentaire extrudé enrobé selon l'une quelconque des revendications 10 à 12, où plus de 20 % en poids par rapport au poids total de l'additif alimentaire est le butyrate, de préférence plus de 30 %, de manière davantage préférée plus de 40 %.

14. Aliment pour animaux auquel l'additif alimentaire extrudé enrobé selon l'une quelconque des revendications 10 à 13 a été ajouté.

15. Utilisation d'un additif alimentaire extrudé enrobé selon l'une quelconque des revendications 10 à 13 pour l'addition à un aliment pour animaux.
